# EUROPEAN PATENT APPLICATION

(11) **EP 4 385 842 A1**
(43) Date of publication of application: **19.06.2024**
(21) Application number: 22891953.6
(22) Date of filing: 08.11.2022
(51) Int. Cl.: B60T 13/74

(54) **BRAKE SYSTEM AND VEHICLE HAVING SAME**

(30) Priority: 09.11.2021 CN 202111317737
(71) Applicant: BYD Company Limited, Shenzhen, Guangdong 518118 (CN)
(72) Inventor: HE, Zhongchang, Shenzhen, Guangdong 518118 (CN); XIONG, Wei, Shenzhen, Guangdong 518118 (CN); LI, Yihui, Shenzhen, Guangdong 518118 (CN); LV, Dandan, Shenzhen, Guangdong 518118 (CN); XU, Jiandong, Shenzhen, Guangdong 518118 (CN)
(74) Representative: Dehns Germany Partnerschaft mbB
(86) International application number: PCT/CN2022/130522
(87) International publication number: WO 2023/083159

(57) **Abstract**

A vehicle is provided, including a brake system. The brake system includes a brake master cylinder assembly, a displacement sensor, an electro-hydraulic assembly, and a control unit. The brake master cylinder assembly is adapted to connect to a brake pedal. The displacement sensor is mounted on the brake master cylinder assembly to detect a displacement of a master cylinder piston inside the brake master cylinder assembly. The electro-hydraulic assembly is arranged separately from the brake master cylinder assembly, connected to the brake master cylinder assembly by a connecting oil pipe to implement communication of a brake fluid, and adapted to connect to a wheel brake. The control unit is communicatively connected to the displacement sensor and the electro-hydraulic assembly, and controls, according to an action of the brake pedal or a brake command, the electro-hydraulic assembly to output the brake fluid to the wheel brake.

## Description

### CROSS-REFERENCE TO RELATED APPLICATION

The present disclosure claims priority to and benefits of Chinese Patent Application No. 202111317737.2, filed on November 9, 2021. The entire content of the above-referenced application is incorporated herein by reference.

### FIELD

The present disclosure relates to the field of vehicle technologies, and more specifically, to a brake system and a vehicle including same.

### BACKGROUND

A brake system in the related art is usually a combination of a vacuum booster master cylinder and an antilock brake system (ABS) module. The vacuum booster master cylinder has a large volume, occupies a lot of space, is complex to repair and replace, and further, requires arrangement of a vacuum pump. Moreover, there is no displacement sensor in the combination of the vacuum booster master cylinder and the ABS module. As a result, brake-by-wire cannot be implemented, and the control accuracy of a braking force is low

### SUMMARY

The present disclosure is intended to resolve at least one of the technical problems existing in the related art. To this end, an objective of the present disclosure is to provide a brake system. The brake system has advantages such as precise braking force control, easy disassembly and assembly, convenient mounting, and a high space utilization.

The present disclosure further provides a vehicle including the foregoing brake system.

To achieve the foregoing objective, according to an embodiment of first aspect of the present disclosure, a brake system is provided, including: a brake master cylinder assembly, a displacement sensor, an electro-hydraulic assembly, and a control unit. The brake master cylinder assembly is adapted to connect to a brake pedal. The brake master cylinder assembly includes a master cylinder housing and a master cylinder piston. The master cylinder piston is reciprocally arranged inside the master cylinder housing and defines a compression chamber inside the master cylinder housing. The displacement sensor is mounted on the brake master cylinder assembly to detect a displacement of the master cylinder piston. The electro-hydraulic assembly is arranged separately from the brake master cylinder assembly and connected to the brake master cylinder assembly by a connecting oil pipe to implement communication of a brake fluid. The electro-hydraulic assembly is adapted to connect to a wheel brake. The control unit is communicatively connected to both the displacement sensor and the electro-hydraulic assembly. The control unit controls, according to an action of the brake pedal or a brake command, the electro-hydraulic assembly to output the brake fluid to the wheel brake.

The brake system according to this embodiment of the present disclosure has advantages such as precise braking force control, easy disassembly and assembly, convenient mounting, and a high space utilization.

According to some embodiments of the present disclosure, the brake master cylinder assembly further includes a push rod. The push rod is connected to the master cylinder piston and adapted to connect to the brake pedal. The displacement sensor is mounted on the master cylinder housing and is connected to the master cylinder piston.

According to some embodiments of the present disclosure, the displacement sensor includes a signal generator and a signal receiver. The signal generator is mounted inside the master cylinder housing and connected to an end of the master cylinder piston adjacent to the push rod. The signal receiver is mounted outside the master cylinder housing and communicatively connected to both the signal generator and the control unit.

According to some embodiments of the present disclosure, an inner wall of the master cylinder housing is provided with a chute extending along a movement direction of the master cylinder piston. The signal generator is slidably fitted to the chute.

According to some embodiments of the present disclosure, the signal generator includes a magnetic component and a magnetic component mounting bracket. The magnetic component mounting bracket includes a radial section and an axial section. The radial section extends along a radial direction of the master cylinder housing and has one end mounted on the master cylinder piston. The axial section extends along an axial direction of the master cylinder housing and has one end connected to an other end of the radial section. An other end of the axial section is slidably fitted to the chute.

According to some embodiments of the present disclosure, an outer periphery of the master cylinder piston is sheathed with a mounting ring. The mounting ring is provided with a ring groove extending along a circumferential direction thereof. The one end of the radial section is mounted in the ring groove.

According to some embodiments of the present disclosure, a depth of the chute is not less than a maximum movement stroke of the master cylinder piston. A depth direction of the chute is the same as or parallel to a reciprocating movement direction of the master cylinder piston.

According to some embodiments of the present disclosure, the signal receiver includes a Hall sensing apparatus. The Hall sensing apparatus is configured to sense a magnetic field strength of the signal generator to detect the action of the brake pedal.

According to some embodiments of the present disclosure, the master cylinder piston includes a first master cylinder piston and a second master cylinder piston. The first master cylinder piston is connected to both the push rod and the displacement sensor. The second master cylinder piston is located at an end of the first master cylinder piston facing away from the push rod. The compression chamber includes a first compression chamber and a second compression chamber. The first compression chamber is formed between the first master cylinder piston and the second master cylinder piston. The second compression chamber is formed between a side of the second master cylinder piston facing away from the first master cylinder piston and the master cylinder housing.

According to some embodiments of the present disclosure, the brake master cylinder assembly further includes a first return spring and a second return spring. The first return spring is arranged inside the first compression chamber and located between the first master cylinder piston and the second master cylinder piston. The second return spring is arranged inside the second compression chamber and located between the side of the second master cylinder piston facing away from the first master cylinder piston and the master cylinder housing.

According to some embodiments of the present disclosure, the brake system further includes an oil pot. The oil pot is mounted outside the master cylinder housing and fixedly connected to the master cylinder housing. The oil pot includes a first opening, a second opening, and a third opening. The master cylinder housing is provided with a first oil passage and a second oil passage. The first oil passage communicates with the first opening and the first compression chamber. The second oil passage communicates with the second opening and the second compression chamber. The third opening communicates with the electro-hydraulic assembly.

According to some embodiments of the present disclosure, the brake system further includes an oil pot. The oil pot is arranged separately from the brake master cylinder assembly and includes a first opening, a second opening, and a third opening. The oil pot communicates with the brake master cylinder assembly through a first pipeline and a second pipeline. The first pipeline communicates with the first opening and the first compression chamber. The second pipeline communicates with the second opening and the second compression chamber. The third opening communicates with the electro-hydraulic assembly.

According to some embodiments of the present disclosure, the brake system further includes an oil pot. The oil pot is arranged separately from the brake master cylinder assembly and includes two openings. An opening of the oil pot communicates with a three-way valve or a three-way pipe. The three-way valve or the three-way pipe communicates with the brake master cylinder assembly through a first pipeline and a second pipeline. The first pipeline and the second pipeline communicate with the first compression chamber and the second compression chamber respectively. The other opening of the oil pot communicates with the electro-hydraulic assembly.

According to some embodiments of the present disclosure, the brake pedal acts synchronously with the master cylinder piston.

According to some embodiments of the present disclosure, the brake system further includes a stroke simulator. The stroke simulator is mounted on the electro-hydraulic assembly. The stroke simulator is connected to the brake master cylinder assembly to implement communication of the brake fluid. By applying a return pressure to the brake fluid delivered to the brake master cylinder assembly, the stroke simulator provides the brake pedal with a damping force that increases with a pedaling depth.

According to some embodiments of the present disclosure, the electro-hydraulic assembly includes a hydraulic housing and an electric brake assembly The control unit and the stroke simulator are mounted on the hydraulic housing. The electric brake assembly is mounted on the hydraulic housing and includes a pressure chamber. The pressure chamber is connected to the brake master cylinder assembly and the wheel brake respectively.

According to some embodiments of the present disclosure, the stroke simulator is located on a lower side of the hydraulic housing.

According to some embodiments of the present disclosure, the electric brake assembly includes a brake housing, a drive motor, a deceleration and torque-increasing apparatus, a transmission screw rod, a transmission nut, and a brake piston. The brake housing is mounted on the hydraulic housing. The drive motor is mounted on the hydraulic housing. The deceleration and torque-increasing apparatus is transmission-connected to the drive motor and arranged on the hydraulic housing. The transmission screw rod is transmission-connected to the deceleration and torque-increasing apparatus. The transmission nut is threadedly connected to the transmission screw rod. The brake piston is mounted inside the brake housing and connected to the transmission nut. The brake piston and the brake housing form the pressure chamber.

According to some embodiments of the present disclosure, the brake system further includes a brake fluid shut-off valve. The brake master cylinder assembly is connected to the wheel brake by the brake fluid shut-off valve. The brake fluid shut-off valve is configured to control transmission of the brake fluid between the brake master cylinder assembly and the wheel brake.

According to an embodiment of a second aspect of the present disclosure, a vehicle is provided, including the brake system according to the embodiment of the first aspect of the present disclosure.

By utilizing the brake system according to the embodiment of the first aspect of the present disclosure, the vehicle according to the embodiment of the second aspect of the present disclosure has advantages such as precise braking force control, easy disassembly and assembly, convenient mounting, and a high space utilization.

Additional aspects and advantages of the present disclosure are partially provided in the following description, and partially become apparent in the following description or understood through the practice of the present disclosure.

### BRIEF DESCRIPTION OF THE DRAWINGS

The foregoing and/or additional aspects and advantages of this application become apparent and comprehensible in the description made with reference to the following accompanying drawing.
FIG. 1 is a schematic structural diagram of a brake system according to an embodiment of the present disclosure;
FIG. 2 is a schematic structural diagram of a brake system according to an embodiment of the present disclosure from another perspective;
FIG. 3 is a schematic structural diagram of a brake system according to an embodiment of the present disclosure from still another perspective;
FIG. 4 is a schematic structural diagram of a brake system according to another embodiment of the present disclosure;
FIG. 5 is a cross-sectional view of a brake master cylinder assembly of a brake system according to an embodiment of the present disclosure;
FIG. 6 is another cross-sectional view of a brake master cylinder assembly of a brake system according to an embodiment of the present disclosure;
FIG. 7 is a schematic structural diagram of an electro-hydraulic assembly of a brake system according to an embodiment of the present disclosure;
FIG. 8 is a cross-sectional view of an electro-hydraulic assembly of a brake system according to an embodiment of the present disclosure;
FIG. 9 is a schematic diagram of flowing of a brake fluid of a brake system according to an embodiment of the present disclosure;
FIG. 10 is another schematic diagram of flowing of a brake fluid of a brake system according to an embodiment of the present disclosure;
FIG. 11 is a schematic block diagram of a signal receiver according to an embodiment of the present disclosure; and
FIG. 12 is a schematic block diagram of a vehicle according to an embodiment of the present disclosure.

### Reference signs:

Brake system 1, brake pedal 2, wheel brake 3,
brake master cylinder assembly 100, brake fluid 101, master cylinder housing 110, first oil passage 111, second oil passage 112, master cylinder piston 120, first master cylinder piston 121, second master cylinder piston 122, accommodating groove 123, compression chamber 130, first compression chamber 131, second compression chamber 132, push rod 140, sealing member 141, mounting ring 150, ring groove 151, first return spring 160, second return spring 170, oil pot 180, first opening 181, second opening 182, third opening 183, first pipeline 184, second pipeline 185, vehicle large-oil pot 186, electro-hydraulic assembly small-oil pot 187, chute 1101, opening 1861, 1862,
displacement sensor 200, signal generator 210, magnetic component mounting bracket 201, radial section 211, axial section 212, magnetic component 213, signal receiver 220, Hall sensing apparatus 2201,
electro-hydraulic assembly 300, hydraulic housing 310, electric brake assembly 320, brake housing 321, drive motor 322, deceleration and torque-increasing apparatus 323, transmission screw rod 324, transmission nut 325, brake piston 326, pressure chamber 327, sun gear 330, planetary gear 340, planetary gear shaft 350, ring gear 360, bearing 370, oil supply pipe (380) 380,
control unit 400, stroke simulator 500, brake fluid shut-off valve 600, first connecting oil pipe 610, second connecting oil pipe 620, pressure maintaining valve 700, pressure reducing valve 800, three-way valve or three-way pipe 900; vehicle 1000.

### DETAILED DESCRIPTION

The embodiments of the present disclosure are described below in detail, and the embodiments described with reference to accompanying drawings are exemplary.

In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In the description of the present disclosure, "multiple" means two or more.

A brake system 1 according to an embodiment of this application is described below with reference to the accompanying drawings.

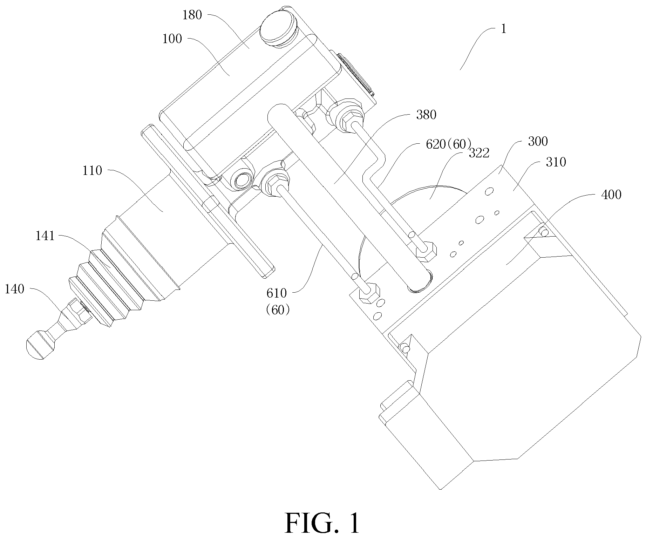

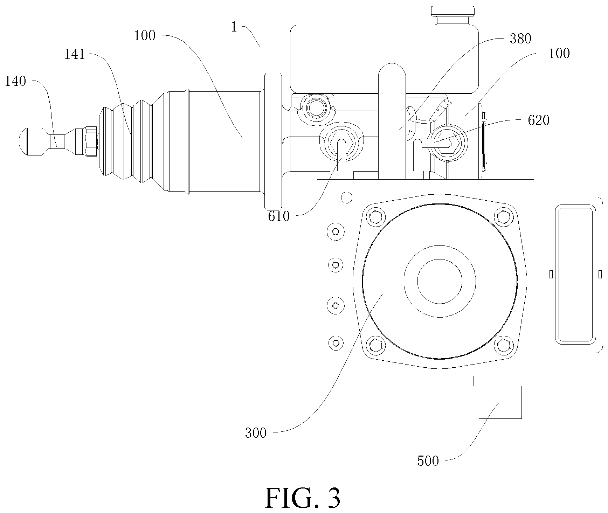

As shown in FIG. 1 to FIG. 11, the brake system 1 includes a brake master cylinder assembly 100, a displacement sensor 200, an electro-hydraulic assembly 300, and a control unit 400.

The brake master cylinder assembly 100 is adapted to connect to a brake pedal 2. The displacement sensor 200 is mounted on the brake master cylinder assembly 100 to detect a displacement of a master cylinder piston 120. The electro-hydraulic assembly 300 is arranged separately from the brake master cylinder assembly 100 and connected to the brake master cylinder assembly 100 by a connecting oil pipe 60 to implement communication of a brake fluid 101. The electro-hydraulic assembly 300 is adapted to connect to a wheel brake 3. The control unit 400 is communicatively connected to both the displacement sensor 200 and the electro-hydraulic assembly 300. The control unit 400 controls, according to an action of the brake pedal 2 or a brake command, the electro-hydraulic assembly 300 to output the brake fluid 101 to the wheel brake 3.

The displacement sensor 200 may detect both a speed and a depth of the brake pedal 2, or the displacement sensor 200 may detect only the depth of the brake pedal 2.

For the brake system 1 according to this embodiment of the present disclosure, the brake master cylinder assembly 100 is adapted to connect to the brake pedal 2, and the displacement sensor 200 is mounted on the brake master cylinder assembly 100, to detect the displacement of the master cylinder piston 120 inside the master cylinder assembly 100. That is, the displacement sensor 200 is integrated into the brake master cylinder assembly 100. In this way, the depth of the brake pedal 2 can be measured more accurately, and it is no longer necessary to separately provide a mounting fastener for the displacement sensor 200, which can reduce a quantity of parts and also reduce a mounting space required for both the displacement sensor 200 and the brake master cylinder assembly 100, thereby improving the space utilization. In addition, because the displacement sensor 200 and the brake master cylinder assembly 100 may be disassembled and assembled together, disassembly and assembly steps are reduced, which can improve the disassembly and assembly efficiency.

The control unit 400 is communicatively connected to the displacement sensor 200. The displacement sensor 200 transfers the depth of the brake pedal 2 to the control unit 400. The control unit 400 can calculate, according to the depth of the brake pedal 2, a braking force required in a braking process. Because the displacement sensor 200 detects the depth of the brake pedal 2 more accurately, the control unit 400 calculates the braking force more accurately. That is, accurate brake-by-wire can be implemented through higher control accuracy of the control unit 400.

In addition, the electro-hydraulic assembly 300 is arranged separately from the brake master cylinder assembly 100 and connected to the brake master cylinder assembly 100 by a connecting oil pipe 60 to implement communication of the brake fluid 101. The electro-hydraulic assembly 300 is adapted to connect to the wheel brake 3. The control unit 400 is communicatively connected to the electro-hydraulic assembly 300. The control unit 400 controls, according to the action of the brake pedal 2 or the control command, the electro-hydraulic assembly 300 to output the brake fluid 101 to the wheel brake 3. In this way, the control unit 400 can control a fluid volume of the brake fluid 101 output by the electro-hydraulic assembly 300 to the wheel brake 3. In addition, when the brake system 1 is used in automatic driving, an automatic driving platform of a vehicle can generate a brake command according to a current road condition, a current vehicle condition, and the like, to form a brake, to adjust a braking force of the wheel brake 3 for a wheel, thereby implementing brakes with different strengths for the vehicle under different conditions, which improves the traveling reliability and extending the service life of the vehicle.

By arranging the electro-hydraulic assembly 300 and the brake master cylinder assembly 100 separately, the electro-hydraulic assembly 300 and the brake master cylinder assembly 100 have a small and compact structure and a simpler production process, which can reduce the machining difficulty and ensure the quality more easily. In addition, mounting positions of the electro-hydraulic assembly 300 and the brake master cylinder assembly 100 may also be changed according to actual requirements. Because the mounting positions of the electro-hydraulic assembly 300 and the brake master cylinder assembly 100 do not affect each other, mounting and arrangement are more flexible and have lower requirements for the mounting space. For example, the brake master cylinder assembly 100 is connected to the brake pedal 2, and the electro-hydraulic assembly 300 may be arranged at another position. Noise conducted to a cab when the electro-hydraulic assembly 300 builds a pressure can be reduced. Moreover, when the brake master cylinder assembly 100 needs to be adjusted, the electro-hydraulic assembly 300 does not need to be adjusted. The brake master cylinder assembly 100 has good interchangeability.

In this way, the brake system 1 according to this embodiment of the present disclosure has advantages such as precise braking force control, easy disassembly and assembly, convenient mounting, and a high space utilization.

According to some specific embodiments of the present disclosure, as shown in FIG. 1 to FIG. 3 and FIG. 5, the brake master cylinder assembly 100 includes a master cylinder housing 110, a master cylinder piston 120, and a push rod 140.

The master cylinder piston 120 is reciprocally arranged inside the master cylinder housing 110 and defines a compression chamber 130 inside the master cylinder housing 110. The push rod 140 is connected to the master cylinder piston 120 and adapted to connect to the brake pedal 2. The displacement sensor 200 is mounted on the master cylinder housing 110 and is connected to the master cylinder piston 120.

For example, an accommodating groove 123 is constructed at an end of the master cylinder piston 120 close to the push rod 140. An end of the push rod 140 is inserted into the accommodating groove 123, and an other end of the push rod 140 is constructed into a spherical shape, to facilitate connecting to the brake pedal 2. Moreover, a sealing member 141 may be arranged at a joint between the push rod 140 and the master cylinder housing 110, to seal a gap between the push rod 140 and the master cylinder housing 110, thereby preventing dust and the like from entering into the master cylinder housing 110 through the gap between the push rod 140 and the master cylinder housing 110.

Components of the displacement sensor 200 and the master cylinder piston 120 are placed inside the master cylinder housing 110. In this way, the components of the displacement sensor 200, the master cylinder piston 120, and the master cylinder housing 110 have a smaller overall volume and can be disassembled and assembled together, which further reduces the disassembly and assembly difficulty of the brake master cylinder assembly 100 and reduces the volume of the brake master cylinder assembly 100.

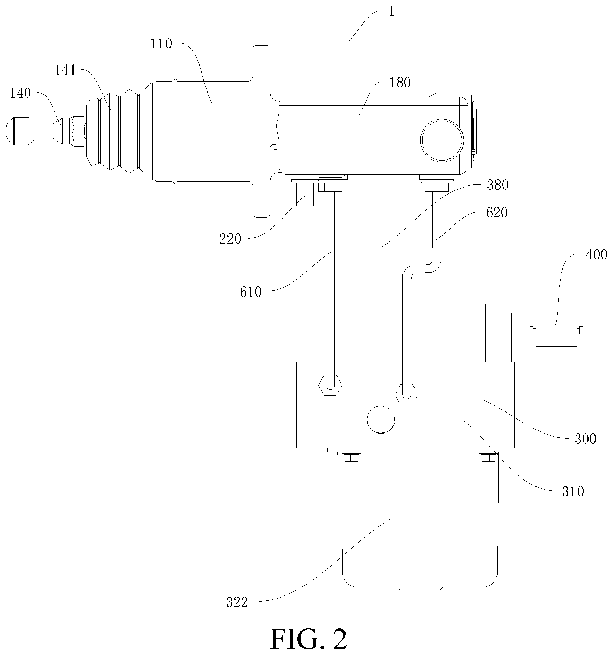

According to some specific embodiments of the present disclosure, as shown in FIG. 2 to FIG. 5, the displacement sensor 200 includes a signal generator 210 and a signal receiver 220. The signal generator 210 is mounted inside the master cylinder housing 110 and connected to an end of the master cylinder piston 120 adjacent to the push rod 140. The signal receiver 220 is mounted outside the master cylinder housing 110 and communicatively connected to the signal generator 210 and the control unit 400.

For example, an axial direction of the signal receiver 220 may be perpendicular to an extending direction of the master cylinder piston 120. In this way, the signal generator 210 may move together with the master cylinder piston 120. The signal generator 210 can detect a current position of the master cylinder piston 120 more accurately, that is, detect the depth of the brake pedal 2 more accurately. Moreover, there is less obstruction between the signal receiver 220 and the control unit 400, which facilitates communication between the signal receiver 220 and the control unit 400, reduces the probability of interference on the communication between the signal receiver 220 and the control unit 400, and can improve the accuracy of receiving an electrical signal from the signal receiver 220 by the control unit 400. The signal receiver 220 and the control unit 400 may be connected by a wire.

Further, an inner wall of the master cylinder housing 110 is provided with a chute 1101 extending along a movement direction of the master cylinder piston 120, and the signal generator 210 is slidably fitted to the chute 1101. In this way, not only interference between the inner wall of the master cylinder housing 110 and the signal generator 210 can be avoided, but also the internal space for the master cylinder housing 110 does not need to be too large. The structural strength of the master cylinder housing 110 can be ensured, and the sealing between the inner wall of the master cylinder housing 110 and the master cylinder piston 120 can also be ensured, to prevent the compression chamber 130 from failing to normally compress the brake fluid 101. Moreover, the chute 1101 can guide the movement of the signal generator 210, which increases the movement stability of the signal generator 210.

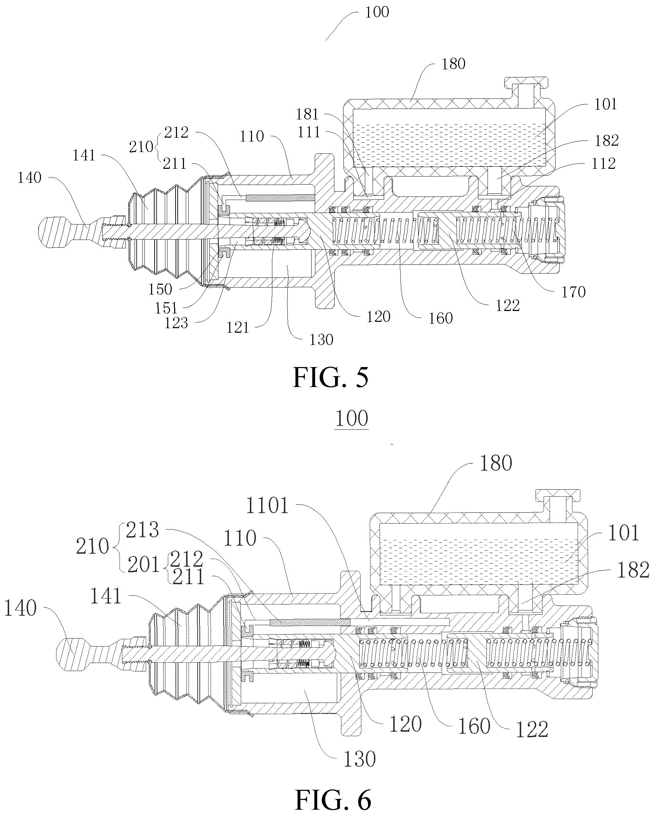

Specifically, as shown in FIG. 5, the signal generator 210 includes a magnetic component 213 and a magnetic component mounting bracket 201. The magnetic component mounting bracket 201 includes a radial section 211 and an axial section 212. The radial section 211 extends along a radial direction of the master cylinder housing 110 and has one end mounted on the master cylinder piston 120. The axial section 212 extends along an axial direction of the master cylinder housing 110 and has one end connected to an other end of the radial section 211. An other end of the axial section 212 is slidably fitted to the chute 1101.

There may be an arc transition between the radial section 211 and the axial section 212, to avoid stress concentration between the radial section 211 and the axial section 212. In this way, not only the fixation between the signal generator 210 and the master cylinder piston 120 can be achieved, but also that the moving direction of the signal generator 210 is parallel to the moving direction of the master cylinder piston 120 can be ensured, thereby improving the accuracy of detection on the depth of the brake pedal 2.

Optionally, an outer periphery of the master cylinder piston 120 is sheathed with a mounting ring 150. The mounting ring 150 is provided with a ring groove 151 extending along a circumferential direction thereof. The one end of the radial section 211 is mounted in the ring groove 151. The mounting ring 150 and the master cylinder piston 120 are in interference fit with each other. For example, an outer peripheral surface of the master cylinder piston 120 close to an end of the push rod 140 is provided with a positioning groove. The mounting ring 150 is located in the positioning groove. An end of the mounting ring 150 abuts against an inner wall of the compression chamber 130, and an other end thereof abuts against a groove wall of the positioning groove.

In this way, the ring groove 151 can fix relative positions of the master cylinder piston 120 and the radial section 211 in an axial direction of the master cylinder piston 120, and the ring groove 151 does not need to be directly machined on the master cylinder piston 120, which can reduce the machining difficulty of the master cylinder piston 120 and can also help replace the mounting ring 150 to adapt to the signal generators 210 of different sizes, thereby improving the applicability of the brake master cylinder assembly 100.

In some embodiments of the present disclosure, a depth of the chute 1101 is not less than a maximum movement stroke of the master cylinder piston 120. A depth direction of the chute 1101 is the same or parallel to a reciprocating movement direction of the master cylinder piston 120 to ensure that master cylinder piston 120 moves smoothly. Such an arrangement can prevent the signal generator 210 from interfering with a bottom wall of the chute 1101 during movement and causing damage to the signal generator 210 or affecting the pedaling depth of the brake pedal 2, thereby reducing the probability of damage to the signal generator 210 and also ensuring that the brake pedal 2 can achieve its maximum displacement.

According to some specific embodiments of the present disclosure, the signal receiver 220 includes a Hall sensing apparatus 2201. The Hall sensing apparatus 2201 is configured to sense a magnetic field strength of the signal generator 210 to detect the action of the brake pedal 2. In this way, the signal generator 210 and the signal receiver 220 do not need to be connected to each other. Therefore, there is no need to reserve structures, such as connecting holes, on the master cylinder housing 110 for the signal generator 210 and the signal receiver 220, thereby ensuring the reliability of signal transfer between the signal generator 210 and signal receiver 220 while increasing the structural strength of the master cylinder housing 110.

Further, the Hall sensing apparatus 2201 is configured to sense the magnetic field strength of the magnetic component 213.

According to some specific embodiments of the present disclosure, as shown in FIG. 5 to FIG. 11, the master cylinder piston 120 includes a first master cylinder piston 121 and a second master cylinder piston 122. The first master cylinder piston 121 is connected to both the push rod 140 and the displacement sensor 200. The second master cylinder piston 122 is located at an end of the first master cylinder piston 121 facing away from the push rod 140. The compression chamber 130 includes a first compression chamber 131 and a second compression chamber 132. The first compression chamber 131 is formed between the first master cylinder piston 121 and the second master cylinder piston 122, and the second compression chamber 132 is formed between a side of the second master cylinder piston 122 facing away from the first master cylinder piston 121 and the master cylinder housing 110.

In this way, the compression chamber 130 is divided into two parts. While providing the same braking effect for the brake system 1, the first master cylinder piston 121 and the second master cylinder piston 122 are arranged separately, to prevent a single master cylinder piston 120 from being too long, thereby improving the structural strength of the master cylinder piston 120, and avoiding an excessively large volume of a single compression chamber 130, to improve the compression effect on the brake fluid 101, thereby improving the braking efficiency.

Further, as shown in FIG. 5, the brake master cylinder assembly 100 further includes a first return spring 160 and a second return spring 170. The first return spring 160 is arranged inside the first compression chamber 131 and located between the first master cylinder piston 121 and the second master cylinder piston 122. The second return spring 170 is arranged inside the second compression chamber 132 and located between the side of the second master cylinder piston 122 facing away from the first master cylinder piston 121 and the master cylinder housing 110.

Through such an arrangement, the first return spring 160 can push the first master cylinder piston 121 to return to a non-braking position, and the second return spring 170 can push the second master cylinder piston 122 to return to a non-braking position. In this way, next use of the brake pedal 2 is facilitated, and when brake pedal 2 is pedaled, the first return spring 160 and the second return spring 170 may provide a damping force for the brake pedal 2, so that a driver clearly knows that the brake pedal 2 has been displaced, and the driver can obtain better feedback.

In some embodiments of the present disclosure, as shown in FIG. 5, the brake system 1 further includes an oil pot 180. The oil pot 180 is mounted outside the master cylinder housing 110 and is fixedly connected to the master cylinder housing 110. The oil pot 180 includes a first opening 181, a second opening 182, and a third opening 183. The master cylinder housing 110 is provided with a first oil passage 111 and a second oil passage 112. The first oil passage 111 communicates with the first opening 181 and the first compression chamber 131. The second oil passage 112 communicates with the second opening 182 and the second compression chamber 132. The third opening 183 communicates with the electro-hydraulic assembly 300.

For example, with reference to FIG. 1 and FIG. 5 to FIG. 11, the third opening 183 and the electro-hydraulic assembly 300 may be connected to each other by an oil supply pipe 380, to avoid the electro-hydraulic assembly 300 from lacking the brake fluid 101 after multiple brakes, thereby improving the reliability of the electro-hydraulic assembly 300. Moreover, the oil pot 180 may supplement the brake fluid 101 to the first compression chamber 131 and the second compression chamber 132 through the first oil passage 111 and the second oil passage 112 respectively. In this way, there is no need to arrange an additional hose structure between the oil pot 180 and the master cylinder housing 110, which simplifies the parts of the brake system 1, lowers costs, and reduces the volume.

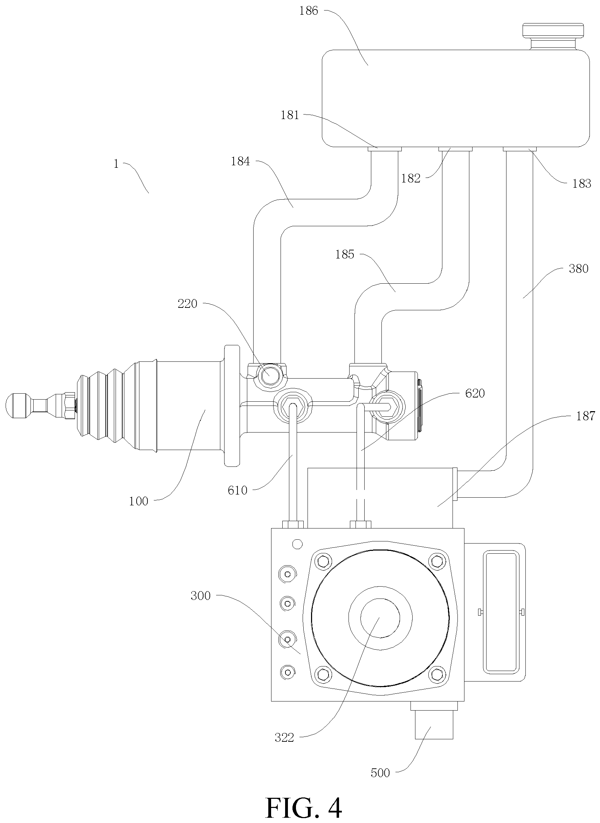

In some other embodiments of the present disclosure, as shown in FIG. 4, the brake system 1 further includes an oil pot 180. The oil pot 180 is arranged separately from the brake master cylinder assembly 100 and includes a first opening 181, a second opening 182, and a third opening 183. The oil pot 180 communicates with the brake master cylinder assembly 100 through a first pipeline 184 and a second pipeline 185. The first pipeline 184 communicates with the first opening 181 and the first compression chamber 131. The second pipeline 185 communicates with the second opening 182 and the second compression chamber 132. The third opening 183 communicates with the electro-hydraulic assembly 300.

For example, the oil pot 180 includes a vehicle large-oil pot 186 and an electro-hydraulic assembly small-oil pot 187. A volume of the vehicle large-oil pot 186 is greater than a volume of the electro-hydraulic assembly small-oil pot 187.

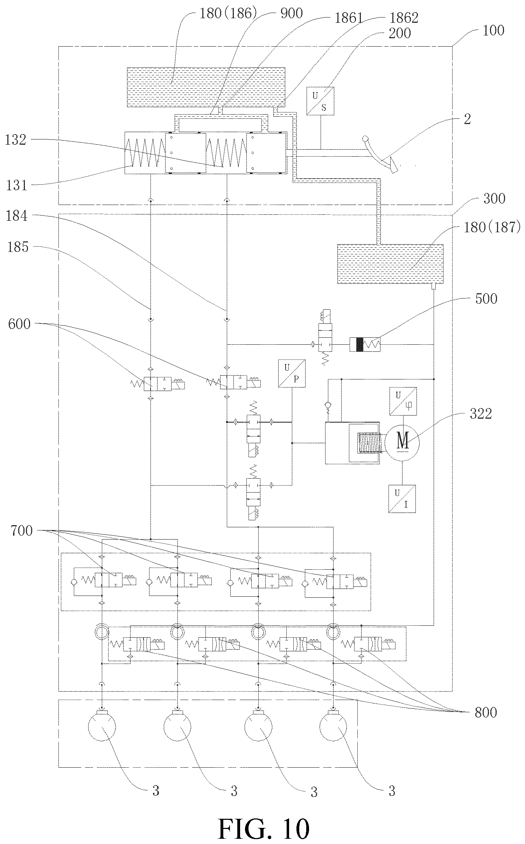

In an embodiment, with reference to FIG. 10, the oil pot 180, for example, the vehicle large-oil pot 186, includes two openings 1861 and 1862. An opening 1861 in the two openings 1861 and 1862 is connected to the master cylinder housing 110 by the three-way valve 900 or the three-way pipe 900. Specifically, a port of the three-way valve 900 or the three-way pipe 900 is connected to an opening of the vehicle large-oil pot 186, and the other two ports of the three-way valve 900 or the three-way pipe 900 are connected to the master cylinder housing 110 by the first pipeline 184 and the second pipeline 185 respectively. The first pipeline 184 and the second pipeline 185 communicate with the first compression chamber 131 and the second compression chamber 132 respectively. The other opening 1862 of the oil pot 180, for example, the vehicle large-oil pot 186, communicates with the electro-hydraulic assembly 300 by the oil supply pipe 380, for example, is connected to the electro-hydraulic assembly small-oil pot 187.

In another embodiment, the vehicle large-oil pot 186 includes a first opening 181, a second opening 182, and a third opening 183. The first opening 181 and the second opening 182 are connected to the master cylinder housing 110 respectively. The third opening 183 is connected to the electro-hydraulic assembly small-oil pot 187 by the oil supply pipe 380. The electro-hydraulic assembly small-oil pot 187 is mounted on the electro-hydraulic assembly 300 and supplements the brake fluid to the electro-hydraulic assembly 300. In this way, when the brake master cylinder assembly 100 needs to be adjusted, the oil pot 180 does not need to be adjusted, and the brake master cylinder assembly 100 has good interchangeability.

According to some specific embodiments of the present disclosure, the brake pedal 2 acts synchronously with master cylinder piston 120. In this way, the displacement of the master cylinder piston 120 detected by the displacement sensor 200 is an actual displacement of the brake pedal 2, which avoids conversion between the displacement of the master cylinder piston 120 and the displacement of the brake pedal 2, leading to simple control logic and convenient calculation.

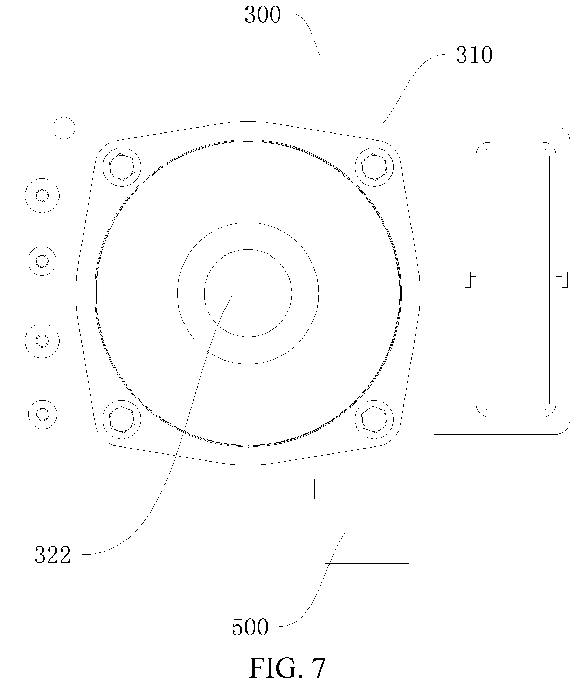

According to some specific embodiments of the present disclosure, as shown in FIG. 7 to FIG. 11, the brake system 1 further includes a stroke simulator 500. The stroke simulator 500 is mounted on the electro-hydraulic assembly 300. The stroke simulator 500 is connected to the brake master cylinder assembly 100 to achieve communication of the brake fluid 101. By applying a return pressure to the brake fluid 101 delivered to the brake master cylinder assembly 100, the stroke simulator 500 provides the brake pedal 2 with a damping force that increases with a pedaling depth.

For example, a spring and a rubber pad are arranged inside the stroke simulator 500. When the brake pedal 2 is pedaled, the brake fluid 101 in the first compression chamber 131 flows out and pushes the rubber pad to move. The rubber pad drives the spring to compress. In this case, the spring has a damping force that pushes the rubber pad to move in an opposite direction. The damping force acts on the first compression chamber 131 through the rubber pad and the brake fluid 101, to prevent the first compression chamber 131 from continuing to shrink, thereby providing damping for the brake pedal 2 to continue moving downward. The damping force can provide the driver with good feedback when the brake pedal 2 is pedaled, which improves the use comfort.

Further, as shown in FIG. 1 to FIG. 3 and FIG. 8 to FIG. 11, the electro-hydraulic assembly 300 includes a hydraulic housing 310 and an electric brake assembly 320. The control unit 400 and the stroke simulator 500 are mounted on the hydraulic housing 310. The electric brake assembly 320 is mounted on the hydraulic housing 310 and includes a pressure chamber 327. The pressure chamber 327 is connected to the brake master cylinder assembly 100 and the wheel brake 3. The stroke simulator 500 is mounted outside the hydraulic housing 310, to facilitate disassembly and assembly between the electro-hydraulic assembly 300 and the stroke simulator 500. In addition, stroke simulators 500 with different damping forces can be matched with different vehicle models, which makes applicability higher.

Specifically, as shown in FIG. 1 to FIG. 3 and FIG. 8 to FIG. 11, the stroke simulator 500 is located on a lower side of the hydraulic housing 310. This not only is beneficial to the exhaust of the brake system 1, but also makes mounting and replacement of the brake system 1 more convenient. In addition, an upper side of the electro-hydraulic assembly 300 can be connected to the brake master cylinder assembly 100. Moreover, the pressure chamber 327 is connected to the third opening 183 by the oil supply pipe 380.

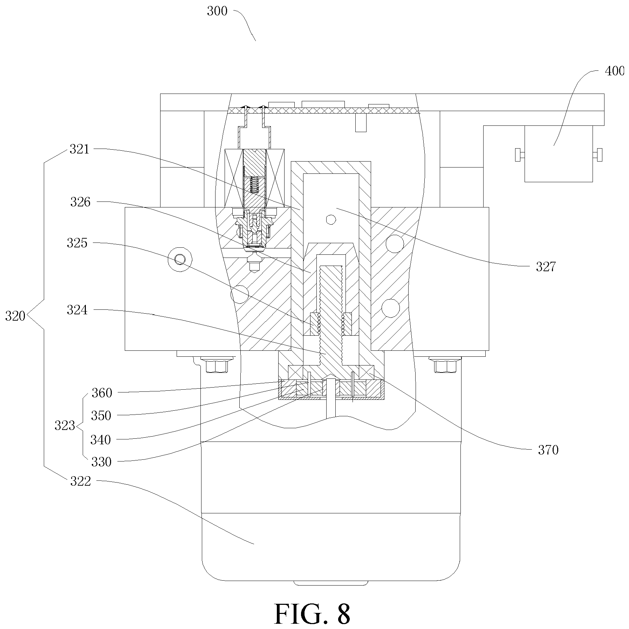

Optionally, as shown in FIG. 8, the electric brake assembly 320 includes a brake housing 321, a drive motor 322, a deceleration and torque-increasing apparatus 323, a transmission screw rod 324, a transmission nut 325, and a brake piston 326.

The brake housing 321 is mounted on the hydraulic housing 310. The drive motor 322 is mounted on the hydraulic housing 310. The deceleration and torque-increasing apparatus 323 is transmission-connected to the drive motor 322 and is located on the hydraulic housing 310. The transmission screw rod 324 is transmission-connected to the deceleration and torque-increasing apparatus 323. The transmission nut 325 is threadedly connected to the transmission screw rod 324. The brake piston 326 is mounted inside the brake housing 321 and connected to the transmission nut 325. The brake piston 326 and the brake housing 321 form the pressure chamber 327.

For example, as shown in FIG. 8, the deceleration and torque-increasing apparatus 323 may be a planetary gear structure. That is, the deceleration and torque-increasing apparatus 323 includes a sun gear 330, a ring gear 360, and multiple planetary gears 340. Each planetary gear 340 is meshed with both the sun gear 330 and the ring gear 360. The multiple planetary gears 340 surround the sun gear 330 along a circumferential direction of the sun gear 330. The ring gear 360 is sleeved over the sun gear 330. An output shaft of the drive motor 322 may be connected to the sun gear 330. The multiple planetary gears 340 are connected to the transmission screw rod 324 by a planetary gear shaft 350. The planetary gear shaft 350 is connected to all the multiple planetary gears 340. That is, the multiple planetary gears 340 jointly drive the planetary gear shaft 350 to move. An output rotation speed of the planetary gear shaft 350 of the deceleration and torque-increasing apparatus 323 is lower than an input rotation speed of the sun gear 330, and an output torque of the planetary gear shaft 350 of the deceleration and torque-increasing apparatus 323 is less than an input torque of the sun gear 330, to achieve the deceleration and torque-increasing effects.

Through the transmission screw rod 324 and the transmission nut 325, rotational movement of the drive motor 322 can be converted into linear movement to drive the brake piston 326 to move in the brake housing 321, to change the volume of the pressure chamber 327, thereby implementing braking and normal traveling of the vehicle. A moving direction of the brake piston 326 may be parallel to an axial direction of the drive motor 322.

As shown in FIG. 2 and FIG. 8, the control unit 400 and the drive motor 322 may be located on two opposite sides of the hydraulic housing 310. Moreover, the transmission nut 325 and the brake piston 326 are fixed together in a rotationally fixed manner, and the transmission screw rod 324 and the planetary gear shaft 350 may be in interference fit with each other. A bearing 370 may be mounted on the transmission screw rod 324 and the hydraulic housing 310 to implement relative rotation between the transmission screw rod 324 and the hydraulic housing 310, and can fix relative positions between the transmission screw rod 324 and the hydraulic housing 310 in the axial direction and the radial direction of the transmission screw rod 324.

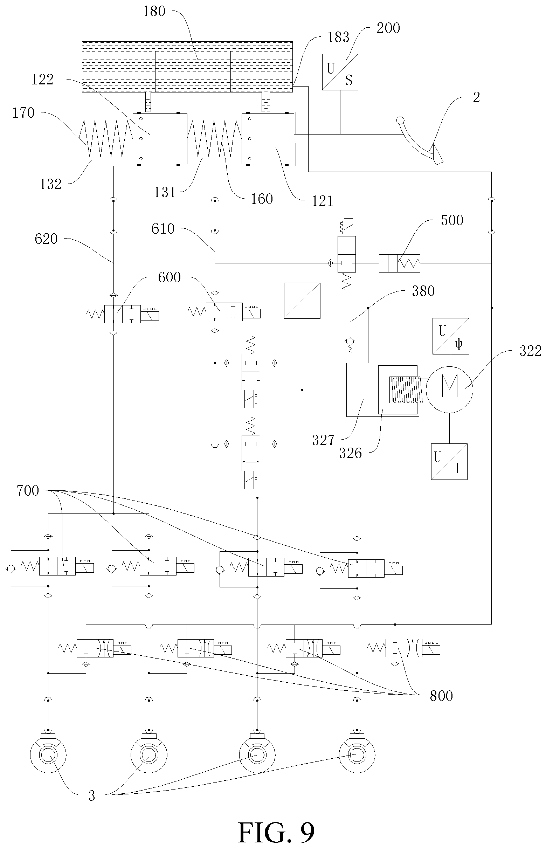

According to some specific embodiments of the present disclosure, as shown in FIG. 9, the brake system 1 further includes a brake fluid shut-off valve 600. The brake master cylinder assembly 100 is connected to the wheel brake 3 by the brake fluid shut-off valve 600. The brake fluid shut-off valve 600 is configured to control transmission of the brake fluid between the brake master cylinder assembly 100 and the wheel brake 3. For example, when being powered on, the brake fluid shut-off valve 600 is in a closed state to prevent the brake master cylinder assembly 100 from transmitting the brake fluid 101 to the wheel brake 3, and when being powered off, the brake fluid shut-off valve 600 is in an open state to allow the brake master cylinder assembly 100 to transmit the brake fluid 101 to the wheel brake 3.

For example, the brake fluid shut-off valve 600 may be a solenoid valve. The solenoid valve and the drive motor 322 are located on two opposite sides of the hydraulic housing 310. The brake fluid shut-off valve 600 is embedded in the hydraulic housing 310 and is sealed by riveting. The control unit 400 can control opening and closing of the brake fluid shut-off valve 600.

In this way, by setting the brake fluid shut-off valve 600, when the vehicle is traveling normally, the control unit 400 controls the brake fluid shut-off valve 600 to be in a closed state. In this case, the vehicle can be accurately braked through only the electric brake assembly 320. When there is a power outage in the vehicle (in this case, the vehicle may fail or the power battery is exhausted), the control unit 400 cannot control the brake fluid shut-off valve 600 to be in a closed state, and the brake fluid shut-off valve 600 changes from the closed state to an open state. When the brake pedal 2 is pedaled, the brake fluid 101 directly enters the wheel brake 3 to brake the vehicle. As a result, the vehicle can be braked in both cases, that is, normal traveling and power-off traveling, which makes the traveling of the vehicle safer.

In some embodiments of the present disclosure, as shown in FIG. 9, a solenoid valve may further be arranged between the brake pedal 2 and the first compression chamber 131. The solenoid valve is in a closed state during power-off and is in an open state during power-on. In other words, when the vehicle is normally traveling, the stroke simulator 500 provides a damping force for the brake pedal 2 when the brake pedal 2 is pedaled. When the vehicle is in a power-off state, the stroke simulator 500 may not provide a damping force for the brake pedal 2, to enable the driver to pedal the brake pedal 2 to the maximum stroke, to implement parking when the vehicle is in a power-off state.

For example, there are four wheel brakes 3, and the four wheel brakes 3 apply braking forces to four wheels respectively. There may be two brake fluid shut-off valves 600. An end of each wheel brake 3 is connected to a pressure reducing valve 800, and an other end thereof is connected to a pressure maintaining valve 700. An end of a brake fluid shut-off valve 600 may be connected to the second compression chamber 132, and an other end thereof is connected to a front-left wheel brake 3 and a rear-right wheel brake 3 by the pressure maintaining valve 700. An end of an other brake fluid shut-off valve 600 may be connected to the first compression chamber 131, and an other end thereof is connected to a rear-left wheel brake 3 and a front-right wheel brake 3. The brake fluid 101 in each wheel brake 3 may be connected to the oil pot 180 by the pressure reducing valve 800 connected thereto. The connecting oil pipe 60 includes a first connecting oil pipe 610 and a second connecting oil pipe 620. A brake fluid shut-off valve 600 is connected to the second compression chamber 132 by the second connecting oil pipe 620. An other brake fluid shut-off valve 600 may be connected to the first compression chamber 131 by the first connecting oil pipe 610.

The flowing route of the brake fluid 101 between the brake system 1 and the wheel brake 3 is described below with reference to the accompanying drawings.

When the brake system 1 is powered on, the brake fluid shut-off valve 600 is closed. When the user pedals the brake pedal 2, the first master cylinder piston 121 and the second master cylinder piston 122 move. Spaces of the first compression chamber 131 and the second compression chamber 132 are reduced. The brake fluid 101 of the first compression chamber 131 flows to the stroke simulator 500 through the first connecting oil pipe 610, to provide foot feel simulation for the brake pedal 2. Moreover, the drive motor 322 rotates to reduce the space of the pressure chamber 327, and the brake fluid 101 in the pressure chamber 327 flows to the wheel brakes 3 through the four pressure maintaining valves 700, to brake the wheels.

When the brake system 1 is powered off, the brake fluid shut-off valve 600 is open. When the user pedals the brake pedal 2, the first master cylinder piston 121 and the second master cylinder piston 122 move. Spaces of the first compression chamber 131 and the second compression chamber 132 are reduced. The brake fluid 101 of the first compression chamber 131 and the second compression chamber 132 flows to the brake fluid shut-off valve 600 through the first connecting oil pipe 610 and the second connecting oil pipe 620, and then flows to the wheel brakes 3 through the pressure maintaining valves 700, to brake the wheels.

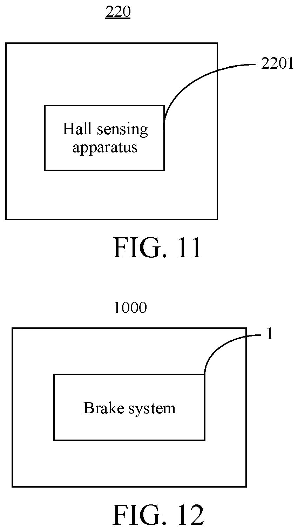

A vehicle 1000 according to an embodiment of the present disclosure is described below with reference to FIG. 12. The vehicle 1000 includes the brake system 1 according to the foregoing embodiments of the present disclosure. The vehicle 1000 may be a passenger car. The brake master cylinder assembly 100 may be mounted on an engine compartment of the passenger car near a front wall panel. Alternatively, the vehicle 1000 may be a light commercial vehicle. The brake master cylinder assembly 100 may be mounted inside a cab of the light commercial vehicle.

In addition, a distance between the electro-hydraulic assembly 300 and a driver may be greater than a distance between the brake master cylinder assembly 100 and the driver. In this way, it is difficult for noise of the electro-hydraulic assembly 300 during operation to be transferred to a position of the driver, thereby improving the noise, vibration, and harshness (NVH) effect.

By utilizing the brake system 1 according to the foregoing embodiments of the present disclosure, the vehicle 1000 according to this embodiment of the present disclosure has advantages such as precise braking force control, easy disassembly and assembly, convenient mounting, and a high space utilization.

Other configurations and operations of the brake system 1 according to the embodiments of the disclosure and the vehicle 1000 including the same are known to a person of ordinary skill in the art, and are not described herein in detail.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms are not necessarily directed at a same embodiment or example.

Although the embodiments of this application have been shown and described, a person of ordinary skill in the art should understand that various changes, modifications, replacements and variations may be made to the embodiments without departing from the principles and spirit of this application, and the scope of this application is as defined by the appended claims and their equivalents.

## Claims

1. A brake system (1), comprising:
a brake master cylinder assembly (100), the brake master cylinder assembly (100) being adapted to connect to a brake pedal (2), and the brake master cylinder assembly (100) comprising:
a master cylinder housing (110); and
a master cylinder piston (120), the master cylinder piston (120) being reciprocally arranged inside the master cylinder housing (110) and defining a compression chamber (130) inside the master cylinder housing (110);
a displacement sensor (200), the displacement sensor (200) being mounted on the brake master cylinder assembly (100) to detect a displacement of the master cylinder piston (120);
an electro-hydraulic assembly (300), the electro-hydraulic assembly (300) being arranged separately from the brake master cylinder assembly (100) and connected to the brake master cylinder assembly (100) by a connecting oil pipe to implement communication of a brake fluid (101), and the electro-hydraulic assembly (300) being adapted to connect to a wheel brake (3); and
a control unit (400), the control unit (400) being communicatively connected to both the displacement sensor (200) and the electro-hydraulic assembly (300), and the control unit (400) controlling, according to an action of the brake pedal (2) or a brake command, the electro-hydraulic assembly (300) to output the brake fluid (101) to the wheel brake (3).

2. The brake system (1) according to claim 1, wherein the brake master cylinder assembly (100) further comprises:
a push rod (140), the push rod (140) being connected to the master cylinder piston (120) and adapted to connect to the brake pedal (2),
wherein the displacement sensor (200) is mounted on the master cylinder housing (110) and is connected to the master cylinder piston (120).

3. The brake system (1) according to claim 1, wherein the displacement sensor (200) comprises:
a signal generator (210), the signal generator (210) being mounted inside the master cylinder housing (110) and connected to an end of the master cylinder piston (120) adjacent to the push rod (140); and
a signal receiver (220), the signal receiver (220) being mounted outside the master cylinder housing (110) and communicatively connected to both the signal generator (210) and the control unit (400).

4. The brake system (1) according to claim 3, wherein an inner wall of the master cylinder housing (110) is provided with a chute (1101) extending along a movement direction of the master cylinder piston (120), and the signal generator (210) is slidably fitted to the chute (1101).

5. The brake system (1) according to claim 4, wherein the signal generator (210) comprises:
a magnetic component (213); and
a magnetic component mounting bracket (201), the magnetic component mounting bracket (201) comprising:
a radial section (211), the radial section (211) extending along a radial direction of the master cylinder housing (110) and having one end mounted on the master cylinder piston (120); and
an axial section (212), the axial section (212) extending along an axial direction of the master cylinder housing (110) and having one end connected to an other end of the radial section (211), an other end of the axial section (212) being slidably fitted to the chute (1101).

6. The brake system (1) according to claim 5, wherein an outer periphery of the master cylinder piston (120) is sheathed with a mounting ring (150), the mounting ring (150) is provided with a ring groove (151) extending along a circumferential direction thereof, and the one end of the radial section (211) is mounted in the ring groove (151).

7. The brake system (1) according to any one of claims 4 to 6, wherein a depth of the chute (1101) is not less than a maximum movement stroke of the master cylinder piston (120), and a depth direction of the chute (1101) is the same as or parallel to a reciprocating movement direction of the master cylinder piston (120).

8. The brake system (1) according to any one of claims 3 to 7, wherein the signal receiver (220) comprises a Hall sensing apparatus (2201), the Hall sensing apparatus (2201) being configured to sense a magnetic field strength of the signal generator (210) to detect the displacement of the master cylinder piston (120).

9. The brake system (1) according to any one of claims 1 to 8, wherein the master cylinder piston (120) comprises:
a first master cylinder piston (121), the first master cylinder piston (121) being connected to both the push rod (140) and the displacement sensor (200); and
a second master cylinder piston (122), the second master cylinder piston (122) being located at an end of the first master cylinder piston (121) facing away from the push rod (140),
wherein the compression chamber (130) comprises a first compression chamber (131) and a second compression chamber (132), the first compression chamber (131) is formed between the first master cylinder piston (121) and the second master cylinder piston (122), and the second compression chamber (132) is formed between a side of the second master cylinder piston (122) facing away from the first master cylinder piston (121) and the master cylinder housing (110).

10. The brake system (1) according to claim 9, wherein the brake master cylinder assembly (100) further comprises:
a first return spring (160), the first return spring (160) being arranged inside the first compression chamber (131) and located between the first master cylinder piston (121) and the second master cylinder piston (122); and
a second return spring (170), the second return spring (170) being arranged inside the second compression chamber (132) and located between the side of the second master cylinder piston (122) facing away from the first master cylinder piston (121) and the master cylinder housing (110).

11. The brake system (1) according to claim 9 or 10, further comprising:
an oil pot (180), the oil pot (180) being mounted outside the master cylinder housing (110) and fixedly connected to the master cylinder housing (110), the oil pot (180) comprising a first opening (181), a second opening (182), and a third opening (183), the master cylinder housing (110) being provided with a first oil passage (111) and a second oil passage (112), the first oil passage (111) communicating with the first opening (181) and the first compression chamber (131), the second oil passage (112) communicating with the second opening (182) and the second compression chamber (132), and the third opening (183) communicating with the electro-hydraulic assembly (300).

12. The brake system (1) according to claim 9 or 10, further comprising:
an oil pot (180), the oil pot (180) being arranged separately from the brake master cylinder assembly (100) and comprising a first opening (181), a second opening (182), and a third opening (183), the oil pot (180) communicating with the brake master cylinder assembly (100) through a first pipeline (184) and a second pipeline (185), the first pipeline (184) communicating with the first opening (181) and the first compression chamber (131), the second pipeline (185) communicating with the second opening (182) and the second compression chamber (132), and the third opening (183) communicating with the electro-hydraulic assembly (300).

13. The brake system (1) according to claim 9 or 10, further comprising:
an oil pot (180), the oil pot (180) being arranged separately from the brake master cylinder assembly (100) and comprising two openings (1861, 1862), an opening (1861) of the oil pot (180) communicating with a three-way valve (900) or a three-way pipe (900), the three-way valve (900) or the three-way pipe (900) communicating with the brake master cylinder assembly (100) through a first pipeline (184) and a second pipeline (185), the first pipeline (184) and the second pipeline (185) communicating with the first compression chamber (131) and the second compression chamber (132) respectively, and the other opening (1862) of the oil pot (180) communicating with the electro-hydraulic assembly (300).

14. The brake system (1) according to any one of claims 1 to 13, wherein the brake pedal (2) acts synchronously with the master cylinder piston (120).

15. The brake system (1) according to any one of claims 1 to 14, further comprising:
a stroke simulator (500), the stroke simulator (500) being mounted on the electro-hydraulic assembly (300), the stroke simulator (500) being connected to the brake master cylinder assembly (100) to implement communication of the brake fluid (101), and by applying a return pressure to the brake fluid (101) delivered to the brake master cylinder assembly (100), the stroke simulator (500) provides the brake pedal (2) with a damping force that increases with a pedaling depth.

16. The brake system (1) according to claim 15, wherein the electro-hydraulic assembly (300) comprises:
a hydraulic housing (310), the control unit (400) and the stroke simulator (500) being mounted on the hydraulic housing (310); and
an electric brake assembly (320), the electric brake assembly (320) being mounted on the hydraulic housing (310) and comprising a pressure chamber (327), the pressure chamber (327) being connected to the brake master cylinder assembly (100) and the wheel brake (3) respectively.

17. The brake system (1) according to claim 16, wherein the stroke simulator (500) is located on a lower side of the hydraulic housing (310).

18. The brake system (1) according to claim 16 or 17, wherein the electric brake assembly (320) comprises:
a brake housing (321), the brake housing (321) being mounted on the hydraulic housing (310);
a drive motor (322), the drive motor (322) being mounted on the hydraulic housing (310);
a deceleration and torque-increasing apparatus (323), the deceleration and torque-increasing apparatus (323) being transmission-connected to the drive motor (322) and arranged on the hydraulic housing (310);
a transmission screw rod (324), the transmission screw rod (324) being transmission-connected to the deceleration and torque-increasing apparatus (323);
a transmission nut (325), the transmission nut (325) being threadedly connected to the transmission screw rod (324); and
a brake piston (326), the brake piston (326) being mounted inside the brake housing (321) and connected to the transmission nut (325), and the brake piston (326) and the brake housing (321) forming the pressure chamber (327).

19. The brake system (1) according to any one of claims 1 to 18, further comprising:
a brake fluid shut-off valve (600), the brake master cylinder assembly (100) being connected to the wheel brake (3) by the brake fluid shut-off valve (600), and the brake fluid shut-off valve (600) being configured to control transmission of the brake fluid between the brake master cylinder assembly (100) and the wheel brake (3).

20. A vehicle (1000), comprising the brake system (1) according to any one of claims 1 to 19.
